# EUROPEAN PATENT APPLICATION

(11) **EP 4 674 668 A1**
(43) Date of publication of application: **07.01.2026**
(21) Application number: 24186439.6
(22) Date of filing: 04.07.2024
(51) Int. Cl.: B60L 3/00, B60L 3/04, B60L 3/12, B60L 58/12, B60L 58/14

(54) **SYSTEM AND METHOD FOR HANDLING LOSS OF COMMUNICATION BETWEEN A VEHICLE CONTROLLER AND AN ELECTRICAL ENERGY STORAGE SYSTEM**

(71) Applicant: VOLVO TRUCK CORPORATION, 405 08 Göteborg (SE)
(72) Inventor: RAY, Dripta, 412 76 Göteborg (SE); PEHRSSON, Björn, 511 68 Hyssna (SE)
(74) Representative: Kransell & Wennborg KB

(57) **Abstract**

A computer system (100) for handling loss of communication between a vehicle controller (102) and an electrical energy storage system (104), the computer system comprises processing circuitry (106) configured to: determine a loss of communication with the vehicle controller, determine that the vehicle (108) is moving subsequent to the loss of communication, and in response, control contactors between the electrical energy storage system and a high voltage bus (112) to maintain closed.

## Description

### TECHNICAL FIELD

The disclosure relates generally to electrical energy storage systems. In particular aspects, the disclosure relates to a system and a method for handling loss of communication between a vehicle controller and an electrical energy storage system. The disclosure can be applied to heavy-duty vehicles, such as trucks, buses, and construction equipment, among other vehicle types. The disclosure can also be applied to passenger cars and industrial applications or vehicles. Although the disclosure may be described with respect to a particular vehicle, the disclosure is not restricted to any particular vehicle.

### BACKGROUND

In case of fault that cause loss of communication in between a battery system of a vehicle and a vehicle controller the response is typically to disengage the battery within predefined time. However, in some situations this may be disadvantageous since it leads to loss in battery power, for example in case of the user is driving up a hill or driving on the motorway.

### SUMMARY

According to a first aspect of the disclosure, there is provided a computer system for handling loss of communication between a vehicle controller and an electrical energy storage system, the computer system comprises processing circuitry configured to: determine a loss of communication with the vehicle controller, determine that the vehicle is moving subsequent to the loss of communication, and in response, control contactors between the electrical energy storage system and a high voltage bus to maintain closed.

The first aspect of the disclosure may seek to ensure that the electrical energy storage system is available even if a loss in communication occurs. A technical benefit may include reduced numbers of unplanned stops due to loss of communication fault. A further technical benefit may include enhanced system safety when there is a loss of communication from the vehicle controller to the electrical energy storage system. The loss of communication is thus between the vehicle controller and the electrical energy storge system.

Optionally in some examples, including in at least one preferred example, the processing circuitry may be comprised in the electrical energy storage system. A technical benefit may include that the processing circuitry is local to the electrical energy storage system and can control the contactor despite a loss in communication.

Optionally in some examples, including in at least one preferred example, the processing circuitry may further be configured to: determine an initial speed of the vehicle at the time of or just prior to that the loss of communication occurred, and only when the initial speed exceeds a threshold, determine whether the vehicle is still moving subsequent to the loss of communication. A technical benefit may include that unplanned stops may be avoided in situations where the vehicle is moving at the time of the loss of communication. If the vehicle is not moving, opening of the contactors may not lead to an unplanned stop.

Optionally in some examples, including in at least one preferred example, the processing circuitry may be further configured to: when the initial speed is determined to be below the threshold, control the contactors to open the connection between the electrical energy storage system and the high voltage bus. That is, if the vehicle is not moving, an unplanned stop is not likely at risk, and the safest option may be to open the contactors.

Optionally in some examples, including in at least one preferred example, the processing circuitry may be further configured to: determine that the vehicle is not moving subsequent to the loss of communication, and control the contactors to open the connection between the electrical energy storage system and the high voltage bus. That is, if the vehicle is not moving subsequent to the loss of communication, an unplanned stop is not likely at risk, and the safest option may be to open the contactors.

Optionally in some examples, including in at least one preferred example, the processing circuitry may be further configured to: acquire position data from a GPS unit installed in the electrical energy storage system to determine a movement of the vehicle. A technical benefit may include that the position data used for determining the movement of the vehicle is collected from a GPS unit local to the electrical energy storage system which means that the data can be collected despite a loss of communication with the vehicle controller.

Optionally in some examples, including in at least one preferred example, the processing circuitry may be further configured to: subsequent to determine the loss of communication with the vehicle controller: determine an initial speed and initial position of the vehicle at the time of or just prior to that the loss of communication occurred, when the initial speed is equal to or exceeds a threshold, determine a subsequent position of the vehicle, determine a vehicle displacement from a difference between the initial position and the subsequent position, determine that the vehicle is moving based on the vehicle displacement, and in response control contactors between the electrical energy storage system and a high voltage bus to maintain closed, and when the initial speed is determined to be below the threshold, control the contactors to open the connection between the electrical energy storage system and the high voltage bus.

There is further provided a vehicle comprising a computer system according to examples of the first aspect.

According to a second aspect of the disclosure, there is provided an electrical energy storage system comprising: at least one electrical energy storage pack connectable to a high voltage bus by at least one contactor, and a processing circuitry configured to: determine a loss of communication with the vehicle controller, determine a present speed of the vehicle subsequent to the loss of communication, determine that the vehicle is moving based on the present speed, and control contactors between the electrical energy storage system and a high voltage bus to maintain closed.

The second aspect of the disclosure may seek to ensure that the electrical energy storage system is available even if a loss in communication occurs. A technical benefit may include reduced numbers of unplanned stops due to loss of communication fault. A further technical benefit may include enhanced system safety when there is a loss of communication from the vehicle controller to the electrical energy storage system.

Optionally in some examples, including in at least one preferred example, the electrical energy storage system may comprise: a GPS unit, wherein the processing circuitry is configured to acquire position data from the GPS unit to determine the speed of the vehicle. A technical benefit may include that the position data used for determining the movement of the vehicle is collected from a GPS unit local to the electrical energy storage system which means that the data can be collected despite a loss of communication with the vehicle controller. The electrical energy storage system may thus autonomously take the decision on how to control the contactors in the event of a loss of communication.

According to a third aspect of the disclosure, there is provided a computer-implemented method for handling loss of communication between a vehicle controller and an electrical energy storage system, the method comprising: determining, by a processing circuitry of a computer system, a loss of communication with the vehicle controller, determining, by the processing circuitry, that the vehicle is moving subsequent to the loss of communication, and in response, controlling, by the processing circuitry, contactors between the electrical energy storage system and a high voltage bus to maintain closed.

The third aspect of the disclosure may seek to ensure that the electrical energy storage system is available even if a loss in communication occurs. A technical benefit may include reduced numbers of unplanned stops due to loss of communication fault. A further technical benefit may include enhanced system safety when there is a loss of communication from the vehicle controller to the electrical energy storage system.

Optionally in some examples, including in at least one preferred example, the method may comprise: determining by the processing circuitry, an initial speed of the vehicle at the time of or just prior to that the loss of communication occurred, and only when the initial speed exceeds a threshold, determining, by the processing circuitry, whether the vehicle is still moving subsequent to the loss of communication. A technical benefit may include that unplanned stops may be avoided in situations where the vehicle is moving at the time of the loss of communication. If the vehicle is not moving, opening of the contactors may not lead to an unplanned stop.

Optionally in some examples, including in at least one preferred example, the method may comprise: when the initial speed is determined to be below the threshold, controlling, by the processing circuitry, the contactors to open the connection between the electrical energy storage system and the high voltage bus. Thus, if the vehicle is not moving, an unplanned stop is not likely at risk, and the safest option may be to open the contactors.

Optionally in some examples, including in at least one preferred example, the method may comprise: determining, by the processing circuitry, that the vehicle is not moving subsequent to the loss of communication, and controlling by the processing circuitry, the contactors to open the connection between the electrical energy storage system and the high voltage bus. That is, if the vehicle is not moving subsequent to the loss of communication, an unplanned stop is not likely at risk, and the safest option may be to open the contactors.

Optionally in some examples, including in at least one preferred example, the method may comprise: acquiring, by the processing circuitry, position data from a GPS unit installed in the electrical energy storage system to determine a movement of the vehicle. A technical benefit may include that the position data used for determining the movement of the vehicle is collected from a GPS unit local to the electrical energy storage system which means that the data can be collected despite a loss of communication with the vehicle controller.

Optionally in some examples, including in at least one preferred example, the method may comprise: subsequent to determine the loss of communication with the vehicle controller: determining, by the processing circuitry, an initial speed and initial position of the vehicle at the time of or just prior to that the loss of communication occurred, when the initial speed is equal to or exceeds a threshold, determining, by the processing circuitry, a subsequent position of the vehicle, determining, by the processing circuitry, a vehicle displacement from a difference between the initial position and the subsequent position, determining, by the processing circuitry, that the vehicle is moving based on the vehicle displacement, and in response control contactors between the electrical energy storage system and a high voltage bus to maintain closed, and when the initial speed is determined to be below the threshold, controlling, by the processing circuitry, the contactors to open the connection between the electrical energy storage system and the high voltage bus.

Optionally in some examples, including in at least one preferred example, the processing circuitry is comprised in the electrical energy storage system. A technical benefit may include that the processing circuitry is local to the electrical energy storage system and can control the contactor despite a loss in communication.

Optionally in some examples, including in at least one preferred example, the method may comprise: determining further that opening the contactors would lead to an unplanned stop, and in response, controlling, by the processing circuitry, contactors between the electrical energy storage system and a high voltage bus to maintain closed in case of a communication loss and that the vehicle is still moving. A technical benefit may include that in case only a single electrical energy storage pack is available, it may be beneficial to allow continued operation of that single electrical energy storage pack. Opening the contactors of the single electrical energy storage pack would lead to an undesirable unplanned stop.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram of a computer system according to an example.
**FIG. 2** is a flow-chart illustrating steps of an example method for handling loss of communication between a vehicle controller and an electrical energy storage system.
**FIG. 3** schematically illustrates an electrical energy storage system according to an example.
**FIG. 4** is a flow-chart of an example method for handling loss of communication between a vehicle controller and an electrical energy storage system.
**FIG. 5** is a flow-chart of an example method for handling loss of communication between a vehicle controller and an electrical energy storage system.
**FIG. 6** is a flow-chart of an example method for handling loss of communication between a vehicle controller and an electrical energy storage system.
**FIG. 7** is another view of **FIG. 1****,** according to an example.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Electrical energy storage systems for vehicles contain high amounts of energy. As a safety precaution the contactors that connect the electrical energy storage system to a high voltage bus are typically controlled to open in case of failure. However, a safety evaluation may be performed by the vehicle controller to ensure that it is safe to open the contactors. For example, in case of the user is driving up a hill or driving on the motorway it might put the driver in a very unsafe state if too much power is lost from the electrical energy storage system.

However, if the failure is or coincides with a loss in communication between the electrical energy storage system and the vehicle controller, the signal from the vehicle controller may not be available to the electrical energy storage system which is left isolated from the rest of the vehicle. This situation is addressed by the herein described examples.

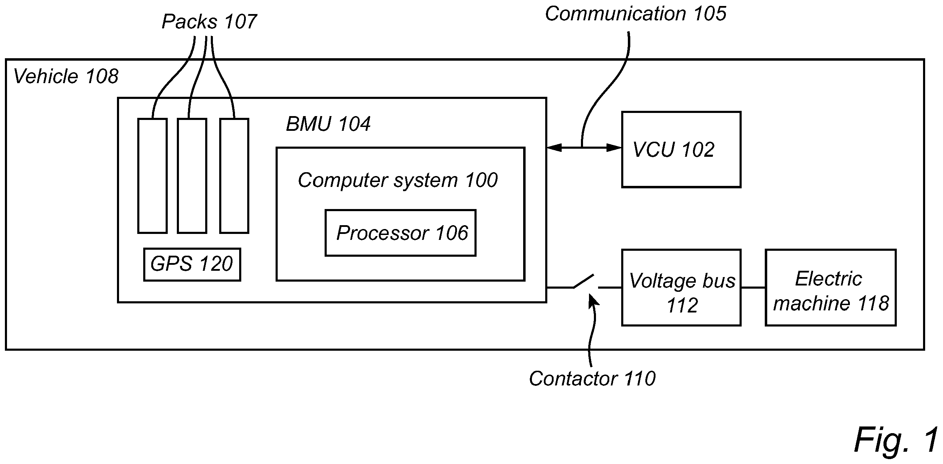

**FIG. 1** is an exemplary system diagram of a computer system 100 for handling loss of communication between a vehicle controller 102 and an electrical energy storage system 104 of a vehicle 108 according to an example.

The computer system 100 comprises processing circuitry 106 configured to determine a loss of communication with the vehicle controller 102. The processing circuitry 106 is comprised in the electrical energy storage system 104, for example as part of a control or management circuit for the electrical energy storage system 104.

The loss of communication is determined, or concluded, by that no response signals are received by the processing circuitry 106 of the electrical energy storage system 104 when a request for response is provided from the vehicle controller 102. That is, the processing circuitry 106 transmits a signal across a communication bus 105 requesting a response from the vehicle controller 102. If no response is received with a predetermined time limit, the loss of communication is concluded. The communication bus 105 may for example be a CAN-bus.

The processing circuitry 106 determines, subsequent to the loss of communication, that the vehicle 108 is moving. This is determined immediately after the loss in communication is determined, i.e., without delay in response to the loss of communication. Although various ways of determining that the vehicle is moving is available, such as acquiring speed data from a speedometer of the vehicle, the preferred way is to acquire position data from a GPS unit 120 installed in the electrical energy storage system 104. Based on the position data, the processing circuit 106 can determine a movement of the vehicle. That is, by comparing two subsequent positions, it can be concluded whether or not the vehicle 108 is moving. With knowledge of the sampling frequency, or the time between the two subsequent positions, the speed of the vehicle 108 can be calculated.

In other possible examples, the GPS unit 120 is the GPS of the vehicle external to the electrical energy storage system 104. The external GPS unit transmits data to the processing circuitry 106 of the electrical energy storage system 104.

In response to concluding that the vehicle 108 is moving subsequent to the loss of communication, control contactors 110 between the electrical energy storage system 104 and a high voltage bus 112 to maintain closed.

The electrical energy storage system 104 comprises multiple electrical energy storage packs 107 comprising multiple electrical energy storage cells with a battery chemistry such as Li-ion cells. The cells may be distributed into modules within each pack.

The contactor 110 has an open state and a closed state. In the closed state, the contactor 110 is configured to connect the electrical energy storage system 104 to the high voltage bus 112, that is, the electrical energy storage system 104 is able to conduct electrical current to the high voltage bus 112. In the open state, the connection between the electrical energy storage system 104 and the high voltage bus 112 is disrupted and no electric current can flow between the electrical energy storage system 104 and the high voltage bus 112. Note that the examples described herein are applicable also at electrical energy storage pack level, that is, the contactor that is controlled is connected between a single electrical energy storage pack 107 and the high voltage bus 112.

The high voltage bus 112 may be a link between the electrical energy storage system 104 and an electric machine 118 providing propulsion power to the vehicle 108. The vehicle 108 may thus be a fully electrified vehicle 108 or a partly electrified vehicle 108 such as a hybrid vehicle.

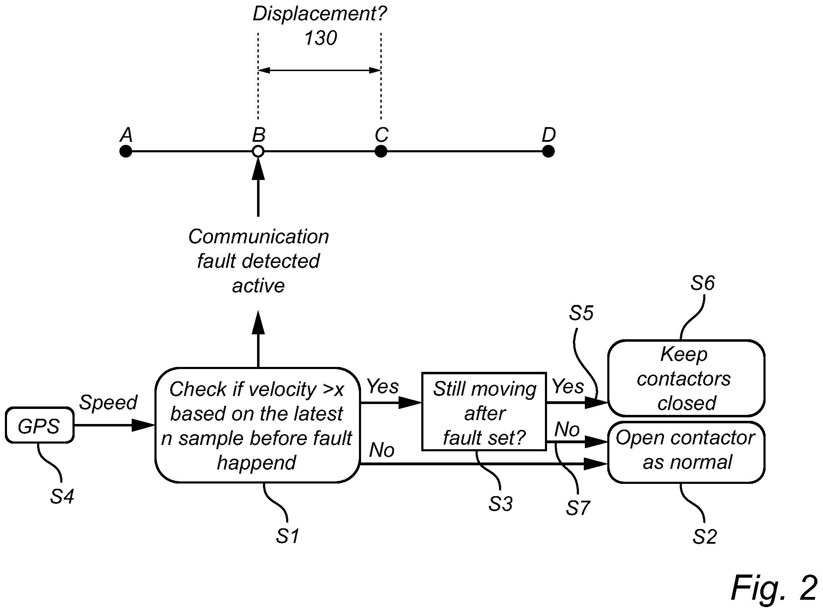

**FIG. 2** is a flow-chart illustrating steps of an example method for handling loss of communication between a vehicle controller 102 and an electrical energy storage system 104. In Fig. 2, a different positions A, B, C, D of the vehicle 108 are chronologically and schematically indicated.

The processing circuitry 106 determines, S1, an initial speed of the vehicle 108 at the time of or just prior to that the loss of communication occurred, at position A or at B. Preferably, it is the speed at the time of that the loss of communication occurred at position B that is used as the initial speed. However, in some cases, a speed at a prior position A may be used. Timewise, the position A is only a small number of samples before position B, meaning that position A is a matter of seconds prior to position B. Thus, once the loss of communication is detected, the most recent sample or samples of vehicle speed that are collected are used as the initial speed.

When the initial speed is determined to be below a threshold, x, the processing circuit controls, S2, the contactors 110 to open the connection between the electrical energy storage system 104 and the high voltage bus 112.

However, when the initial speed is equal to or exceeds the threshold, x, the processing circuitry 106 determines, S3, whether the vehicle is still moving subsequent to the loss of communication at B. Determining whether the vehicle 108 is still moving may be performed by evaluating, S4, position data from a global positioning system unit 120 of the electrical energy storage system 104. The position data may be the latest n samples prior to the loss in communication.

The processing circuitry 106 determines an initial position B and a subsequent position C. The processing circuitry 106 is configured to calculate a vehicle displacement 130, from a difference between the initial position B and the subsequent position C. If there is displacement, the processing circuitry can determine or conclude that the vehicle 108 is moving, S5. In response, the processing circuitry 106 control contactors 110 between the electrical energy storage system 104 and the high voltage bus 122 to maintain closed, S6.

However, if the processing circuitry 106 determines that the vehicle is not moving subsequent to the loss of communication, S7, the contactors are controlled to open the connection between the electrical energy storage system 104 and the high voltage bus 112, S2.

The GPS unit 120 may directly communicates with the processing circuitry 106, independent on the vehicle controller 102. In case of a fault related to loss of communication between the vehicle controller 102 and the processing circuitry 106 electrical energy storage system 104, GPS signals from the GPS unit 120 are used to determine if the vehicle was moving or not before the fault is set. When the vehicle 108 is determined to be moving and a communication fault is set, the contactors are maintained closed which improves the availability of the system 104 especially from worst case scenario perspective which is when the vehicle was running with only one electrical energy storage pack alive. Thus, if the vehicle 108 is still moving the processing circuitry 106 can take a decision to keep contactor 110 closed (electrical energy storage system 104 still in use) temporarily to avoid unplanned stop due to a short communication error.

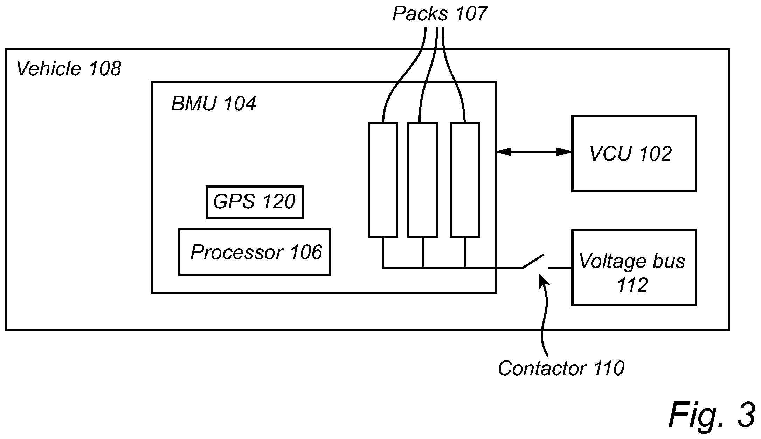

**FIG. 3** illustrates an electrical energy storage system 104 according to an example. The electrical energy storage system 104 comprises at least one electrical energy storage pack 107 connectable to a high voltage bus 112 by at least one contactor 110, and a processing circuitry 106 configured to: determine a loss of communication with a vehicle controller 102, determine a present speed of the vehicle subsequent to the loss of communication, determine that the vehicle 108 is moving based on the present speed, and control the at least one contactor 112 between the electrical energy storage system and a high voltage bus 112 to maintain closed.

The electrical energy storage system 104 preferably comprises a GPS unit 120. The processing circuitry 106 is configured to acquire position data from the GPS unit to determine the speed and/or movement of the vehicle 108.

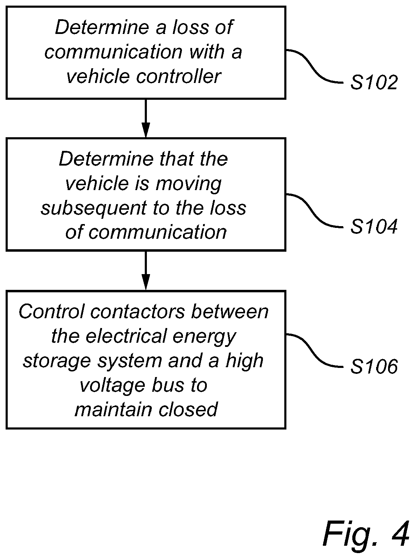

**FIG. 4** is a flow-chart of method steps according to an example method for handling loss of communication between a vehicle controller 102 and an electrical energy storage system 104.

In step S 102, determining, by a processing circuitry 106 of a computer system 100, a loss of communication with the vehicle controller 102.

In step S104, determining, by the processing circuitry, that the vehicle 108 is moving subsequent to the loss of communication.

And, in response, controlling in step S106, by the processing circuitry, contactors 110 between the electrical energy storage system 104 and a high voltage bus 112 to maintain closed.

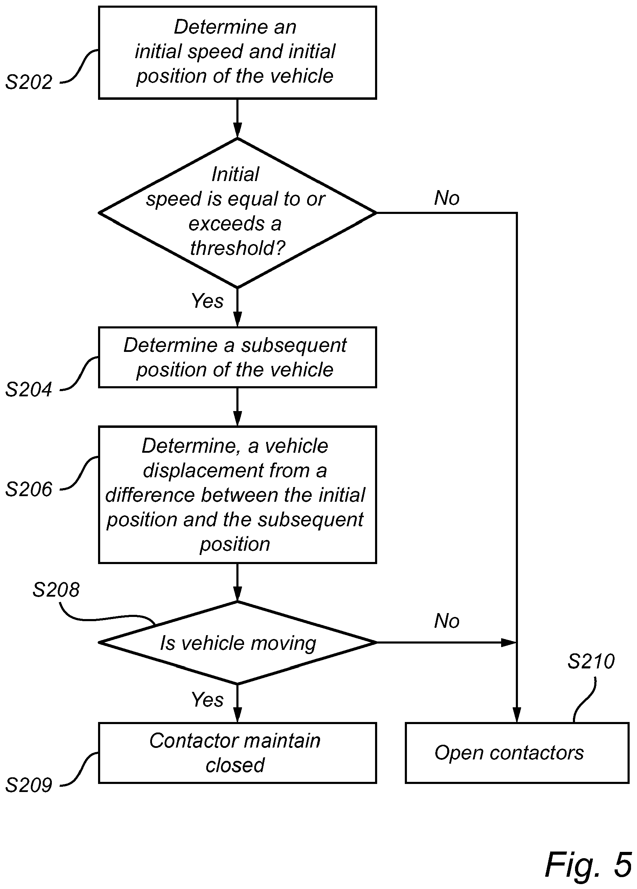

**FIG. 5** is a flow-chart of method steps according to an example method for handling loss of communication between a vehicle controller 102 and an electrical energy storage system 104.

The method steps are performed subsequent to determining the loss of communication with the vehicle controller 102.

In step S202, determining, by the processing circuitry 106, an initial speed and initial position A or B of the vehicle 108 at the time of or just prior to that the loss of communication occurred.

In step S204, when the initial speed is equal to or exceeds a threshold, x, determining, by the processing circuitry 106, a subsequent position, C, of the vehicle 108.

In step S206, determining, by the processing circuitry 106, a vehicle displacement 130 from a difference between the initial position A or B and the subsequent position C.

In Step S208, determining, by the processing circuitry 106, that the vehicle 108 is moving based on the vehicle displacement 130, and in response control, in step S209 contactors 110 between the electrical energy storage system 104 and a high voltage bus 122 to maintain closed.

If it is determined, based on the vehicle displacement, that the vehicle 108 is not moving, the processing circuitry controls in step S210, the contactors 110 to open the connection between the electrical energy storage system 104 and the high voltage bus 112.

Similarly, when the initial speed in step S202 is determined to be below the threshold, x, controlling, by the processing circuitry 106, the contactors 110 to open the connection between the electrical energy storage system 104 and the high voltage bus 112 in step S210.

The methods described herein may be preceded by a step of determining that the at least one contactor 110 is in its closed state.

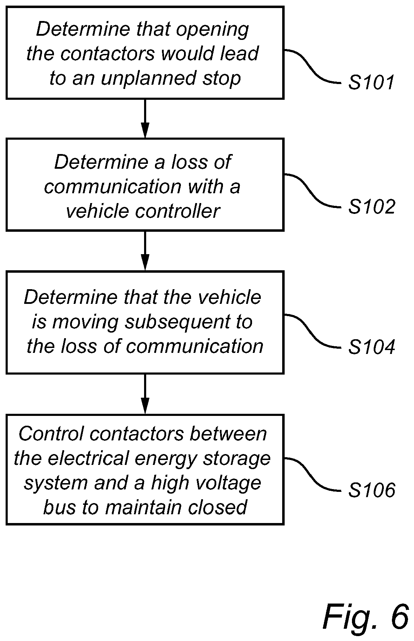

**FIG. 6** is a flow-chart of method steps according to an example method for handling loss of communication between a vehicle controller 102 and an electrical energy storage system 104.

In initial step S101, determining, by the processing circuitry 106, that opening the contactors 110 would lead to an unplanned stop. For example, the situation may be that the vehicle is driving uphill under a high load with only one electrical energy storage pack 107 available, or with only few such that they are all needed to provide the present power demand. In such case, in the event of a communication loss, the contactors are controlled to maintain closed in step S 106 in case of a communication loss and that the vehicle is still moving as discussed in steps S102 and S104.

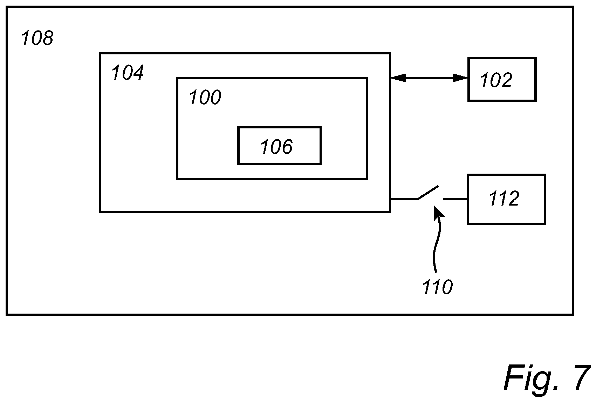

**FIG. 7** is another view of **FIG. 1****,** according to an example. A computer system 100 for handling loss of communication between a vehicle controller 102 and an electrical energy storage system 104, the computer system comprises processing circuitry 106 configured to: determine a loss of communication with the vehicle controller 102, determine that the vehicle 108 is moving subsequent to the loss of communication, and in response, control contactors 110 between the electrical energy storage system 104 and a high voltage bus 112 to maintain closed.

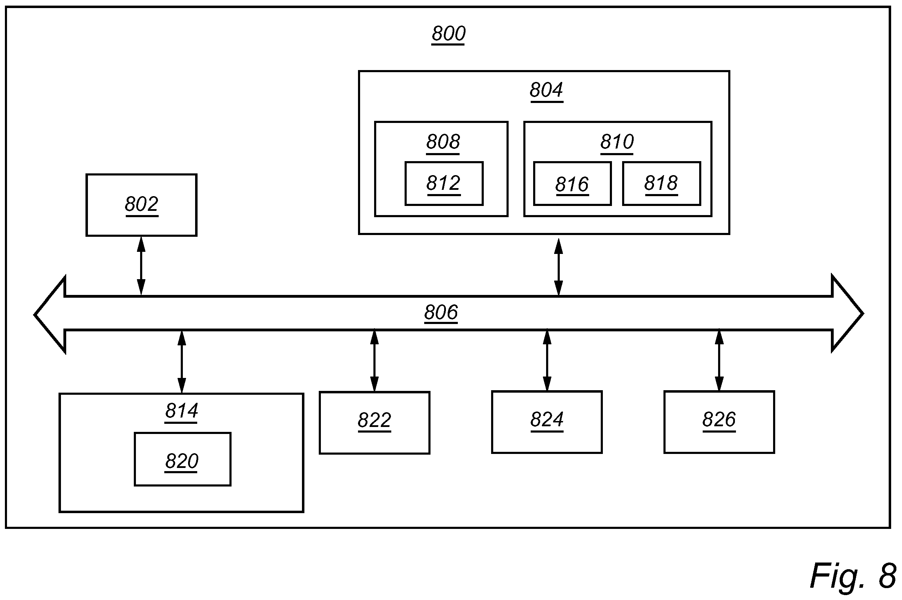

**FIG. 8** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804,** and a system bus **806.** The computer system **800** may include at least one computing device having the processing circuitry **802.** The system bus **806** provides an interface for system components including, but not limited to, the memory **804** and the processing circuitry **802.** The processing circuitry **802** may include any number of hardware components for conducting data or signal processing or for executing computer code stored in memory **804.** The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802.** In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802.** The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device
interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.
Example 1: A computer system for handling loss of communication between a vehicle controller and an electrical energy storage system, the computer system comprises processing circuitry configured to: determine a loss of communication with the vehicle controller, determine that the vehicle is moving subsequent to the loss of communication, and in response, control contactors between the electrical energy storage system and a high voltage bus to maintain closed.
Example 2: The computer system of example 1, wherein the processing circuitry is comprised in the electrical energy storage system.
Example 3: The computer system of any of examples 1-2, wherein the processing circuitry is further configured to: determine an initial speed of the vehicle at the time of or just prior to that the loss of communication occurred, and only when the initial speed exceeds a threshold, determine whether the vehicle is still moving subsequent to the loss of communication.
Example 4: the computer system of example 3, wherein the processing circuitry is further configured to: when the initial speed is determined to be below the threshold (x), control the contactors to open the connection between the electrical energy storage system and the high voltage bus.
Example 5: The computer system of any of examples 1-4, wherein the processing circuitry is further configured to: determine that the vehicle is not moving subsequent to the loss of communication, and control the contactors to open the connection between the electrical energy storage system and the high voltage bus.
Example 6: The computer system of any of examples 1-5, wherein the processing circuitry is further configured to: acquire position data from a GPS (114) unit installed in the electrical energy storage system to determine a movement of the vehicle.
Example 7: The computer system of example 1, wherein the processing circuitry is further configured to: subsequent to determine the loss of communication with the vehicle controller: determine an initial speed and initial position of the vehicle at the time of or just prior to that the loss of communication occurred, when the initial speed is equal to or exceeds a threshold, determine a subsequent position of the vehicle, determine a vehicle displacement from a difference between the initial position and the subsequent position, determine that the vehicle is moving based on the vehicle displacement, and in response control contactors between the electrical energy storage system and a high voltage bus to maintain closed, and when the initial speed is determined to be below the threshold, control the contactors to open the connection between the electrical energy storage system and the high voltage bus.
Example 8: A vehicle comprising the computer system of any of examples 1-7.
Example 9: An electrical energy storage system comprising: at least one electrical energy storage pack connectable to a high voltage bus by at least one contactor, and a processing circuitry configured to: determine a loss of communication with the vehicle controller, determine a present speed of the vehicle subsequent to the loss of communication, determine that the vehicle is moving based on the present speed, and control contactors between the electrical energy storage system and a high voltage bus to maintain closed.
Example 10: The electrical energy storage system of example 9, comprising: a GPS unit, wherein the processing circuitry is configured to acquire position data from the GPS unit to determine the speed of the vehicle.
Example 11: A computer-implemented method for handling loss of communication between a vehicle controller and an electrical energy storage system, the method comprising: determining, by a processing circuitry of a computer system, a loss of communication with the vehicle controller, determining, by the processing circuitry, that the vehicle is moving subsequent to the loss of communication, and in response, controlling, by the processing circuitry, contactors between the electrical energy storage system and a high voltage bus to maintain closed.
Example 12: The method of example 11, further comprising: determining by the processing circuitry, an initial speed of the vehicle at the time of or just prior to that the loss of communication occurred, and only when the initial speed exceeds a threshold, determining, by the processing circuitry, whether the vehicle is still moving subsequent to the loss of communication.
Example 13: The method of example 12, further comprising: when the initial speed is determined to be below the threshold, controlling, by the processing circuitry, the contactors to open the connection between the electrical energy storage system and the high voltage bus.
Example 14: The method of any of examples 11-13, further comprising: determining, by the processing circuitry, that the vehicle is not moving subsequent to the loss of communication, and controlling by the processing circuitry, the contactors to open the connection between the electrical energy storage system and the high voltage bus.
Example 15: The method of any of examples 11-14, further comprising: acquiring, by the processing circuitry, position data from a GPS unit installed in the electrical energy storage system to determine a movement of the vehicle.
Example 16: The computer system of example 11, further comprising: subsequent to determine the loss of communication with the vehicle controller: determining, by the processing circuitry, an initial speed and initial position of the vehicle at the time of or just prior to that the loss of communication occurred, when the initial speed is equal to or exceeds a threshold, determining, by the processing circuitry, a subsequent position of the vehicle, determining, by the processing circuitry, a vehicle displacement from a difference between the initial position and the subsequent position, determining, by the processing circuitry, that the vehicle is moving based on the vehicle displacement, and in response control contactors between the electrical energy storage system and a high voltage bus to maintain closed, and when the initial speed is determined to be below the threshold, controlling, by the processing circuitry, the contactors to open the connection between the electrical energy storage system and the high voltage bus.
Example 17: The method of any of examples 11-16, wherein the processing circuitry is comprised in the electrical energy storage system.
Example 18: The method of any of examples 11-17, further comprising: determining further that opening the contactors would lead to an unplanned stop, and in response, controlling, by the processing circuitry, contactors between the electrical energy storage system and a high voltage bus to maintain closed in case of a communication loss and that the vehicle is still moving.
Example 19: A computer program product comprising program code for performing, when executed by the processing circuitry, the method of any of examples 11-18.
Example 20: A non-transitory computer-readable storage medium comprising instructions, which when executed by the processing circuitry, cause the processing circuitry to perform the method of any of examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) for handling loss of communication between a vehicle controller (102) and an electrical energy storage system (104), the computer system comprises processing circuitry (106) configured to:
determine a loss of communication with the vehicle controller (102),
determine that the vehicle (108) is moving subsequent to the loss of communication, and
in response, control contactors (110) between the electrical energy storage system (104) and a high voltage bus (112) to maintain closed.

2. The computer system of claim 1, wherein the processing circuitry (102) is comprised in the electrical energy storage system (104).

3. The computer system of any of claims 1-2, wherein the processing circuitry is further configured to:
determine an initial speed of the vehicle at the time of or just prior to that the loss of communication occurred, and
only when the initial speed is equal to or exceeds a threshold (x), determine whether the vehicle is still moving subsequent to the loss of communication.

4. The computer system of claim 3, wherein the processing circuitry is further configured to:
when the initial speed is determined to be below the threshold (x), control the contactors to open the connection between the electrical energy storage system and the high voltage bus.

5. The computer system of any of claims 1-4, wherein the processing circuitry is further configured to:
determine that the vehicle is not moving subsequent to the loss of communication, and
control the contactors to open the connection between the electrical energy storage system and the high voltage bus.

6. The computer system of any of claims 1-5, wherein the processing circuitry is further configured to:
acquire position data from a GPS (114) unit installed in the electrical energy storage system to determine a movement of the vehicle.

7. The computer system of claim 1, wherein the processing circuitry is further configured to:
subsequent to determine the loss of communication with the vehicle controller:
determine an initial speed and initial position of the vehicle at the time of or just prior to that the loss of communication occurred,
when the initial speed is equal to or exceeds a threshold (x), determine a subsequent position of the vehicle,
determine a vehicle displacement (130) from a difference between the initial position and the subsequent position,
determine that the vehicle is moving based on the vehicle displacement, and in response control contactors between the electrical energy storage system and a high voltage bus to maintain closed, and
when the initial speed is determined to be below the threshold (x), control the contactors to open the connection between the electrical energy storage system and the high voltage bus.

8. A vehicle (108) comprising the computer system of any of claims 1-7.

9. An electrical energy storage system (104) comprising:
at least one electrical energy storage pack connectable to a high voltage bus by at least one contactor, and a processing circuitry configured to:
determine a loss of communication with the vehicle controller,
determine a present speed of the vehicle subsequent to the loss of communication,
determine that the vehicle is moving based on the present speed, and
control contactors between the electrical energy storage system and a high voltage bus to maintain closed.

10. The electrical energy storage system of claim 9, comprising:
a GPS unit,
wherein the processing circuitry is configured to acquire position data from the GPS unit to determine the speed of the vehicle.

11. A computer-implemented method for handling loss of communication between a vehicle controller (102) and an electrical energy storage system (104), the method comprising:
determining (S102), by a processing circuitry of a computer system, a loss of communication with the vehicle controller,
determining (S104), by the processing circuitry, that the vehicle (108) is moving subsequent to the loss of communication, and
in response, controlling (S106), by the processing circuitry, contactors between the electrical energy storage system and a high voltage bus (112) to maintain closed.

12. The method of claim 11, further comprising:
subsequent to determine the loss of communication with the vehicle controller:
determining (S202), by the processing circuitry, an initial speed and initial position of the vehicle at the time of or just prior to that the loss of communication occurred,
when the initial speed is equal to or exceeds a threshold (x), determining (S204), by the processing circuitry, a subsequent position of the vehicle,
determining (S206), by the processing circuitry, a vehicle displacement from a difference between the initial position and the subsequent position,
determining (S208), by the processing circuitry, that the vehicle is moving based on the vehicle displacement, and in response control contactors between the electrical energy storage system and a high voltage bus to maintain closed, and
when the initial speed is determined to be below the threshold (x), controlling (S210), by the processing circuitry, the contactors to open the connection between the electrical energy storage system and the high voltage bus.

13. The method of any of claims 11-12, further comprising:
determining further that opening the contactors would lead to an unplanned stop, and in response,
controlling (S106), by the processing circuitry, contactors between the electrical energy storage system and a high voltage bus (112) to maintain closed in case of a communication loss and that the vehicle is still moving.

14. A computer program product comprising program code for performing, when executed by the processing circuitry, the method of any of claims 11-13.

15. A non-transitory computer-readable storage medium comprising instructions, which when executed by the processing circuitry, cause the processing circuitry to perform the method of any of claims 11-13.
